# EUROPÄISCHE PATENTSCHRIFT

(11) **EP 4 330 120 B1**
(45) Veröffentlichungstag und Bekanntmachung des Hinweises auf die Patenterteilung: **04.09.2024**
(21) Anmeldenummer: 23715861.3
(22) Anmeldetag: 30.03.2023
(51) Int. Cl.: B62J 45/00, B62J 50/22, B62J 43/30, B62M 6/40, B62K 3/00, B62K 19/30

(54) **FAHRRAD- ODER E-BIKE-SCHNITTSTELLE UND FAHRRAD ODER E-BIKE**
BIKE OR E-BIKE INTERFACE AND BIKE OR E-BIKE
INTERFACE VÉLO OU E-BIKE ET VÉLO OU E-BIKE

(30) Priorität: 22.04.2022 DE 102022109790
(43) Veröffentlichungstag der Anmeldung: 06.03.2024
(73) Patentinhaber: Porsche eBike Performance GmbH, 85521 Ottobrunn (DE)
(72) Erfinder: BIECHELE, Johannes, 83083 Riedering (DE)
(74) Vertreter: Patentanwälte Bauer Vorberg Kayser
(86) Internationale Anmeldenummer: PCT/EP2023/058298
(87) Internationale Veröffentlichungsnummer: WO 2023/202861

(56) Entgegenhaltungen:
- EP-A1- 2 642 611
- EP-B1- 3 372 482
- WO-A1-2014/060073
- WO-A1-2020/146038
- CN-U- 207 417 048
- CN-U- 209 479 836
- CN-U- 209 479 836
- US-A1- 2020 207 435
- US-B2- 10 933 936

## Beschreibung

Die Erfindung betrifft eine Fahrrad- oder E-Bike-Schnittstelle zum Bereitstellen einer Verbindung zwischen einem Fahrrad oder E-Bike und einer Datenverarbeitungseinrichtung, z. B. einem mobilen Gerät, wie etwa einem Mobiltelefon. Darüber hinaus betrifft die Erfindung ein Fahrrad oder E-Bike umfassend eine derartige Fahrrad- oder E-Bike-Schnittstelle.

Zu E-Bikes werden im Rahmen dieser Druckschrift Elektrofahrräder und auch Elektro-(Tret-)Roller, Elektro-Mofas und elektrische Motorräder gezählt. Fahrräder oder E-Bikes sind oft einspurig. Sie können, z. B. in Form eines dreirädrigen Lastenfahrrads mit oder ohne elektrischen Antriebsmotor, auch mehrspurig sein. E-Bikes weisen einen elektrischen Antriebsmotor auf. Der elektrische Antriebsmotor kann als alleiniger Antrieb, beispielsweise bei einem Elektro-Mofa, einem Elektroroller oder einem elektrischen Motorrad, fungieren. Insbesondere kann der elektrische Antriebsmotor aber auch lediglich als Hilfsantrieb, wie bei einem Elektrofahrrad, vorgesehen sein. Elektrofahrräder, bei denen der elektrische Antriebsmotor lediglich als Hilfsantrieb wirkt, beispielsweise nur dann, wenn der Nutzer tritt, werden gemeinhin auch als Pedelecs oder S-Pedelecs bezeichnet.

Fahrrad- oder E-Bike-Schnittstellen können beispielsweise dazu genutzt werden, um bei längeren Touren eine Datenverarbeitungseinrichtung, z. B. ein mobiles Gerät, wie etwa ein Mobiltelefon oder ein Navigationsgerät, zu laden.

Fahrräder- oder E-Bikes weisen meist keine Karosserie auf, weshalb Fahrrad- oder E-Bike-Schnittstellen oft witterungsbeständig sein müssen. Nutzer achten zudem auf Funktionalität, Bedienkomfort und auf das optische Erscheinungsbild von Fahrrad- oder E-Bike-Schnittstellen sowie auf deren optische und technische Integration in das Fahrrad oder E-Bike.

CN 209479836U zeigt ein Ladegerät für an einem Motorrad angeordnete Mobiltelefone, welche die Merkmale der Präambel von Anspruch 1 offenbart.

EP 3372482B1 zeigt einen Rahmen für ein elektrisch unterstütztes Fahrzeug. Ein Controller kann in das Unterrohr des Rahmens eingebaut sein.

US 10933936B2 zeigt ein elektronisches Gerät, das zumindest teilweise in einem Rahmen eines Fahrrads montiert sein kann und zur Überwachung von Vorgängen oder Eigenschaften des Fahrrads oder einer oder mehrerer mit dem Fahrrad verbundener Komponenten dienen kann.

Aus WO 2014060073A1 ist ein Bedien- und/oder Anzeigesystem an einem Pedelec-Lenker bekannt, mit einer Bedien- und/oder Anzeigeeinheit und einem Halter.

US 2020207435A1 zeigt einen Vorbau eines Fahrrads mit einer integrierten visuelle Anzeige, die dem Benutzer Leistungs- und Richtungsinformationen liefert.

WO 2020146038A1 zeigt ein Lenkersystem mit einer Benutzerschnittstelle, die an einem Unterkomponentengehäuse befestigt ist und einen Lautsprecher, ein Mikrofon und mindestens eine manuelle Eingabe umfasst.

Eine der durch die Erfindung zu lösende Aufgabe liegt daher darin, eine insbesondere in den genannten Punkten verbesserte Fahrrad- oder E-Bike-Schnittstelle bereitzustellen. Darüber hinaus liegt der Erfindung die Aufgabe zugrunde, ein verbessertes Fahrrad oder E-Bike umfassend eine derartige Fahrrad- oder E-Bike-Schnittstelle anzubieten.

Zur Lösung oben genannter Aufgaben wird eine Fahrrad- oder E-Bike-Schnittstelle mit den Merkmalen des Patentanspruchs 1 und ein Fahrrad oder E-Bike mit den Merkmalen des Patentanspruchs 14 vorgeschlagen.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich. Auch können die im Zusammenhang mit der Fahrrad- oder E-Bike-Schnittstelle beschriebenen Merkmale vorteilhafte Ausgestaltungen des Fahrrades oder E-Bikes sein und umgekehrt.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Erfindungsgemäß wird eine Fahrrad- oder E-Bike-Schnittstelle zum Bereitstellen einer Verbindung zwischen einem Fahrrad oder E-Bike und einer Datenverarbeitungseinrichtung, z. B. einem mobilen Gerät, vorgeschlagen. Die Fahrrad- oder E-Bike-Schnittstelle weist einen Stecker, eine Steckeraufnahme, eine Halterung und Befestigungsmittel auf. Die Steckeraufnahme ist mittels der Befestigungsmittel verlagerbar an der Halterung befestigt.

Durch die verlagerbare Befestigung der Steckeraufnahme an der Halterung kann insbesondere dann, wenn der Stecker nicht mit einem Gegenstecker verbunden ist, bzw. die Fahrrad- oder E-Bike-Schnittstelle nicht genutzt wird, ein Schutz, z. B. Witterungsschutz, des Steckers und/oder ein optisch besonders ansprechendes Erscheinungsbild der Fahrrad- oder E-Bike-Schnittstelle erzielbar sein, bei komfortabler Nutzbarkeit der Fahrrad- oder E-Bike-Schnittstelle, insbesondere bei komfortabel herstellbarer Steckverbindung.

Der Stecker ist bevorzugt ein Steckverbinder und weiter bevorzugt ein Lade- und/oder Datensteckverbinder. Bevorzugt dient der Stecker zur Herstellung einer Steckverbindung mit einem insbesondere zu der Datenverarbeitungseinrichtung gehörigen Gegenstecker, der als Gegensteckverbinder ausgebildet sein kann.

Die Datenverarbeitungseinrichtung kann ein mobiles Gerät, insbesondere mit einem Versorgungsakkumulator sein. Das mobile Gerät kann beispielsweise ein Mobiltelefon bzw. ein Navigationsgerät sein.

Die Datenverarbeitungseinrichtung kann ein Diagnosegerät sein. Das Diagnosegerät kann bevorzugt den Zustand des Fahrrades oder E-Bikes anzeigen, z. B. die Laufleistung des Fahrrades oder E-Bikes und/oder den Zustand eines Antriebsakkumulators des E-bikes, z. B. dessen Kapazität, etwa relativ zu der Kapazität im Neuzustand.

Bevorzugt ist die Fahrrad- oder E-Bike-Schnittstelle so eingerichtet, dass mit ihrer Hilfe - und bevorzugt mittels des Steckers - Ladestrom für eine insbesondere als Mobiltelefon bzw. Navigationsgerät ausgebildete Datenverarbeitungseinrichtung bereitstellbar ist.

Die Fahrrad- oder E-Bike-Schnittstelle ist bevorzugt so eingerichtet, dass mit ihrer Hilfe - und bevorzugt mittels des Steckers - Daten zwischen dem Fahrrad oder E-Bike und der insbesondere als Diagnosegerät ausgebildeten Datenverarbeitungseinrichtung übertragbar sind.

In einer besonders vorteilhaften Ausführungsvariante ist die Fahrrad- oder E-Bike-Schnittstelle so eingerichtet, dass mit ihrer Hilfe - und bevorzugt mittels des Steckers - sowohl Ladestrom für eine insbesondere als Mobiltelefon bzw. Navigationsgerät ausgebildete Datenverarbeitungseinrichtung bereitstellbar ist als auch, gleichzeitig oder nacheinander, Daten zwischen dem Fahrrad oder E-Bike und der insbesondere als Diagnosegerät ausgebildeten Datenverarbeitungseinrichtung übertragbar sind.

Die Verbindung zwischen dem Fahrrad oder E-Bike und der Datenverarbeitungseinrichtung, zu deren Herstellung die Fahrrad- oder E-Bike-Schnittstelle dient, ist bevorzugt elektrisch bzw. elektronisch. Bevorzugt ist mittels des Steckers eine galvanische Verbindung zwischen dem Fahrrad oder E-Bike und der Datenverarbeitungseinrichtung herstellbar. Die Verbindung kann auch eine Wirkverbindung, etwa über Funk, ohne physischen Kontakt bzw. ohne galvanische Verbindung, umfassen.

Bevorzugt ist der Stecker an der Steckeraufnahme befestigt, vorzugsweise unbeweglich relativ zu dieser, beispielsweise form- und/oder stoffschlüssig. Bevorzugt ist der Stecker - vorzugsweise fest - in die Steckeraufnahme eingebaut bzw. integriert. Der Stecker kann weiter bevorzugt auch als Einbaustecker oder als Buchse bezeichnet werden.

Bevorzugt ist die Halterung dazu eingerichtet, an dem Fahrrad oder dem E-Bike fixiert zu werden. Mittels der Halterung ist bevorzugt eine mechanische Anbindung der Steckeraufnahme an das Fahrrad oder E-Bike herstellbar. Die Halterung kann auch von dem Fahrrad- oder E-Bike-Rahmen oder Fahrrad- oder E-Bike-Lenkervorbau gebildet sein, z. B. in Form einer Ausnehmung in dem Rahmen oder Lenkervorbau des Fahrrades oder E-Bikes.

Bevorzugt ist die Fahrrad- oder E-Bike-Schnittstelle so eingerichtet, dass das Herstellen einer Steckverbindung durch Verbinden eines Gegensteckers mit dem Stecker einhändig möglich ist.

Indem, wie bevorzugt, der Stecker an der Steckeraufnahme und die Steckeraufnahme, wie besonders bevorzugt, an der Halterung befestigt ist, ist die Herstellung einer Steckverbindung durch Verbinden des Steckers mit einem Gegenstecker, verglichen mit der denkbaren Alternative, in der der Stecker an einem losen Kabelende angeordnet ist, komfortabler. Zudem kann hierdurch eine Voraussetzung dafür geschaffen sein, dass das Herstellen einer Steckverbindung durch Verbinden eines Gegensteckers mit dem Stecker einhändig möglich sein kann.

Die Befestigungsmittel, mittels derer die Steckeraufnahme verlagerbar an der Halterung befestigt ist, können als Lager und/oder Führungselemente ausgebildet sein.

Gemäß einer vorteilhaften Ausführungsvariante umfassen die Befestigungsmittel an der Steckeraufnahme angeordnete Aufnahmebefestigungsmittel. Gemäß einer vorteilhaften Ausführungsvariante umfassen die Befestigungsmittel zudem an der Halterung angeordnete Halterungsbefestigungsmittel. Die Aufnahmebefestigungsmittel und die Halterungsbefestigungsmittel sind bevorzugt korrespondierend zueinander ausgebildet.

Die Befestigungsmittel können auf ihre Befestigungsfunktion hin spezialisiert sein. Die Befestigungsmittel können ausschließlich Befestigungsfunktion aufweisen. Alternativ kann die Befestigungsfunktion zusätzlich zu einer weiteren Funktion der Befestigungsmittel gegeben sein. Eines der Befestigungsmittel kann beispielsweise einen Fahrradrahmenabschnitt umfassen oder hierdurch gebildet sein, mit dem ein weiteres Befestigungsmittel zusammenwirkt.

In einer bevorzugten Ausführungsform ist die Steckeraufnahme mittels der Befestigungsmittel um eine Schwenkachse verschwenkbar an der Halterung befestigt. Die verlagerbare Befestigung kann also eine Rotationsbewegung der Steckeraufnahme relativ zu der Halterung vorgeben bzw. zulassen.

Wenn die Schwenkachse virtuell ist, die Schwenkbewegung insbesondere also nicht durch einen die Schwenkachse definierenden Lagerbolzen vorgegeben ist, dann kann sich eine besonders einfache Fertigung und/oder Montage der Fahrrad- oder E-Bike-Schnittstelle ergeben.

Auch wenn die Schwenkachse verlagerbar ist, kann dies der Fertigung und/oder Montage der Fahrrad- oder E-Bike-Schnittstelle zugutekommen.

Die verlagerbare Befestigung kann alternativ oder zusätzlich zu der Rotationsbewegung eine Translationsbewegung der Steckeraufnahme relativ zu der Halterung zulassen.

Ein besonders guter Schutz der Steckeraufnahme bzw. des Steckers z. B. vor Witterung und/oder eine optisch besonders ansprechende Fahrrad- oder E-Bike-Schnittstelle kann dadurch erzielt sein, dass die Befestigungsmittel derart ausgebildet sind, dass sie ein Verlagern der Steckeraufnahme relativ zu der Halterung zwischen einer ersten, bevorzugt eingeschwenkten, Position der Steckeraufnahme, und einer zweiten, bevorzugt ausgeschwenkten, Position, der Steckeraufnahme ermöglichen.

Vorteilhafterweise ist die Steckeraufnahme von der ersten Position in die zweite Position bringbar, indem die Steckeraufnahme oder ein Bereich der Steckeraufnahme von der Halterung wegbewegt werden.

In einer bevorzugten Ausführungsvariante ist die Steckeraufnahme mittels der Befestigungsmittel schwimmend in der Halterung gelagert. Hiermit ist insbesondere gemeint, dass die Steckeraufnahme - vorzugsweise innerhalb einer durch Anschläge bewirkten Bewegungslimitierung - eine Vielzahl von beliebigen Bewegungen relativ zu der Halterung ausführen kann.

Bevorzugt weist die Steckeraufnahme einen Griff auf. Vorzugsweise erleichtert der Griff einem Nutzer eine Verlagerung der Steckeraufnahme von der ersten Position in die zweite Position.

Die Steckeraufnahme kann der Witterung ausgesetzt sein und auch der Stecker kann zumindest in der zweiten Position der Steckeraufnahme der Witterung ausgesetzt sein.

In einer besonders vorteilhaften Ausführungsvariante ist der Stecker in der ersten Position der Steckeraufnahme vor Schmutz und Witterung, z. B. Regen, geschützt. Es kann eine Dichtungseinrichtung vorgesehen sein, insbesondere zwischen der Steckeraufnahme und der Halterung, um den Stecker in der ersten Position der Steckeraufnahme vor Schmutz und Witterung zu schützen.

Bevorzugt weist der Stecker ein Steckgesicht auf. Der Stecker, insbesondere sein Steckgesicht, ist in der ersten Position der Steckeraufnahme zumindest teilweise in der Halterung versenkt, vorzugsweise derart, dass der Stecker für das Herstellen und/oder Trennen einer Steckverbindung unzugänglich ist und weiter bevorzugt vor der Witterung geschützt ist.

Der Stecker, insbesondere sein Steckgesicht, ist in der zweiten Position der Steckeraufnahme zumindest teilweise außerhalb der Halterung angeordnet, vorzugsweise derart, dass der Stecker für das Herstellen und/oder Trennen einer Steckverbindung zugänglich ist.

Bevorzugt umfasst die Fahrrad- oder E-Bike-Schnittstelle Rückholmittel. Bevorzugt können die Rückholmittel eine selbstständige Zurückverlagerung der Steckeraufnahme in die erste Position bewirken, nachdem die Steckeraufnahme in ihre zweite Position verlagert wurde. Hierdurch kann eine weitere Komfortsteigerung erzielt sein. In einer Ausführungsvariante bewirken die Rückholmittel eine Zugkraft zwischen der Steckeraufnahme und der Halterung. Hierdurch kann auf einfache Weise eine selbstständige Zurückverlagerung der Steckeraufnahme von der zweiten Position in die erste Position bewirkbar sein.

Die Rückholmittel können z. B. eine Zug- oder Schenkelfeder umfassen. Insbesondere dann, wenn die Rückholmittel, bevorzugt mittels der Zugkraft, auch das selbständige Wegbewegen der Steckeraufnahme von der Halterung bzw. das selbständige Verlagern der Steckeraufnahme von der ersten Position in die zweite Position verhindern, also eine Fixierung der Steckeraufnahme in der ersten Position bewirken, können sie auch als Rückhaltemittel bezeichnet werden.

Wenn die Zugkraft in der ersten Position der Steckeraufnahme größer ist als in der zweiten Position, dann kann der Bedienungskomfort weiter gesteigert sein. Denn ein Nutzer muss dann beispielsweise während der Herstellung einer Steckverbindung in der zweiten Position nur eine geringere Gegenkraft aufbringen, bei beispielsweise für eine zuverlässige Fixierung in der ersten Position ausreichend großer Zugkraft in der ersten Position der Steckeraufnahme.

In einer bevorzugten Ausgestaltung umfassen die Rückholmittel ein an der Steckeraufnahme angeordnetes Aufnahmerückholmittel und ein mit diesem zusammenwirkendes an der Halterung angeordnetes Halterungsrückholmittel.

Eine kompakte Fahrrad- oder E-Bike-Schnittstelle kann erreicht werden, wenn eine Verlagerung von der zweiten Position in die erste Position nur möglich ist, wenn keine Steckverbindung hergestellt ist.

Bevorzugt ist mittels der Rückholmittel ein mit dem Stecker eine Steckverbindung bildender Gegenstecker einklemmbar. Hierdurch kann eine Zugentlastung der Steckverbindung bewirkt oder unterstützt werden.

Alternativ kann die Steckeraufnahme in der zweiten Position in einer Rastposition sein, in der die Zugkraft der Rückholmittel von einer Rasteinrichtung aufgenommen wird.

Bevorzugt wirken die Rückholmittel berührungslos. Zur Bewirkung der Zugkraft durch die Rückholmittel ist es daher bevorzugt nicht erforderlich, dass sich die Rückholmittel gegenseitig berühren oder dass sie miteinander berührend verbunden werden. Dies kann die Montage der Fahrrad- oder E-Bike-Schnittstelle vereinfachen.

Besonders geeignete Rückholmittel können erzielt sein, wenn die Rückholmittel einen Magnet und ein magnetisches Gegenstück umfassen und die Zugkraft bevorzugt durch die magnetische Anziehungskraft bereitgestellt wird. Da die magnetische Anziehungskraft mit abnehmendem Abstand von Magnet und magnetischem Gegenstück zunimmt, kann hierdurch auf einfache Art und Weise erreicht werden, dass die Zugkraft in der ersten Position der Steckeraufnahme größer ist als in der zweiten Position.

Eine einfache Montage bzw. Wartung der Fahrrad- oder E-Bike-Schnittstelle kann erzielbar sein, wenn die Steckeraufnahme werkzeuglos mit der Halterung verbindbar, bevorzugt verrastbar, und/oder von dieser trennbar, bevorzugt herausklickbar, ist. Mit dem Begriff "herausklickbar" ist insbesondere die zerstörungsfreie Trennbarkeit nach Überwindung einer elastischen Kraft und/oder nach Lösen eines durch federbelastete Elemente gebildeten Formschlusses gemeint.

Bevorzugt erlauben sowohl die Befestigungsmittel als auch die Rückholmittel das werkzeuglose Verbinden und/oder Trennen von Steckeraufnahme und Halterung.

Eine besonders robuste verlagerbare Befestigung der Steckeraufnahme an der Halterung kann erzielbar sein, wenn die Befestigungsmittel mindestens eine, bevorzugt gekrümmte, Führungskulisse und einen in die Führungskulisse eingreifenden Kulissenstein umfassen. Die mindestens eine Führungskulisse kann an der Steckeraufnahme angeordnet sein. Der mindestens eine Kulissenstein kann an der Halterung angeordnet sein. Eine umgekehrte Anordnung ist möglich. Die Führungskulisse kann die Virtualität der Schwenkachse bewirken. Die Krümmung der Führungskulisse kann den Radius der Rotationsbewegung der Steckeraufnahme relativ zur Halterung definieren oder hieran mitwirken.

Auch wenn die Befestigungsmittel mindestens einen Vorsprung umfassen, der mit mindestens einem Gegenvorsprung einen Anschlag bereitstellt, kann eine besonders robuste verlagerbare Befestigung der Steckeraufnahme an der Halterung erzielbar sein. Der mindestens eine Vorsprung ist bevorzugt an der Steckeraufnahme angeordnet. Der mindestens eine Gegenvorsprung ist bevorzugt an der Halterung angeordnet. Eine umgekehrte Anordnung ist möglich.

Die Befestigungsmittel können mindestens einen Vorsprung zur Bildung eines Anschlags umfassen, der das von der Halterung weg Bewegen der Steckeraufnahme begrenzen und die zweite Position der Steckeraufnahme definieren oder hieran mitwirken kann. Wenn der Vorsprung als Rastnase ausgebildet ist, dann ist eine Voraussetzung dafür geschaffen, dass die Steckeraufnahme auf besonders geeignete Weise werkzeuglos mit der Halterung verbindbar und/oder von dieser trennbar ist. Die Rastnase ist bevorzugt, wie dies für Rastnasen üblich ist, federnd gelagert. Die Steckeraufnahme kann mittels Verlagern der Rastnase gegen die Kraft dieser Feder "herausklickbar" sein.

In einer besonders vorteilhaften Ausführungsvariante umfassen die Befestigungsmittel zwei gegenüberliegende Führungskulissen und Kulissensteine.

Wenn der mindestens eine Kulissenstein, insbesondere ähnlich einer Rastnase, mittels einer Feder gelagert ist, bevorzugt an der Steckeraufnahme oder der Halterung, dann ist erneut eine Voraussetzung dafür geschaffen, dass die Steckeraufnahme auf besonders geeignete Weise werkzeuglos mit der Halterung verbindbar und/oder von dieser trennbar ist. Eine einfache Fertigung und Montage kann sich ergeben, wenn diese Feder einstückig mit der Steckeraufnahme oder der Halterung ausgebildet ist, beispielsweise als Blattfeder. Die Steckeraufnahme kann mittels Verlagern des Kulissensteins gegen die Kraft dieser Feder herausklickbar sein.

Bevorzugt umfasst die Halterung Fixiermittel zur Befestigung der Halterung an dem Fahrrad oder E-Bike.

Weiter bevorzugt umfassen die Fixiermittel mindestens eine Halteklammer zum Hintergreifen eines Bereichs des Fahrrades oder E-Bikes, beispielsweise einer Rahmeninnenwand.

Die Fixiermittel können zudem eine Schraube umfassen, wobei die Schraube mit einer Mutter zusammenwirken kann, die als Gabelmutter ausgeführt sein kann.

Die Schraube und die Halteklammer können jeweils in einem Endbereich der Halterung angeordnet sein. Diese Endbereiche können einander gegenüberliegen.

Die Gabelmutter kann einen Gabelkopf umfassen. Der Gabelkopf kann ein Innengewinde und zur Abstützung an dem Fahrrad oder E-Bike, beispielsweise an einer Rahmeninnenwand, Gabelzinken umfassen. Die Mutter kann mittels eines Fangriemens und einer Haltezange verliersicher an der Halterung angeordnet sein. Der Fangriemen kann mit einem Ende fest an der Mutter angeordnet und mit dem anderen Ende in die Haltezange einklickbar bzw. verrastbar sein.

In einer wichtigen Ausführungsform umfasst der Stecker einen USB-Stecker oder ist hierdurch gebildet.

Der USB-Stecker kann beispielsweise ein Typ A oder Mico USB-Stecker sein. Bevorzugt ist es ein Typ C USB-Stecker.

Bevorzugt ist die Fahrrad- oder E-Bike-Schnittstelle multifunktional.

In einer bevorzugten Ausführungsvariante weist die Fahrrad- oder E-Bike-Schnittstelle eine Anzeigevorrichtung, beispielsweise mindestens eine LED und/oder ein Matrixdisplay, etwa LCD-Display, auf. Bevorzugt kann die Fahrrad- oder E-Bike-Schnittstelle hierdurch zusätzlich zu der Funktion des Ladens eines mobilen Geräts mittels des Fahrrades oder des E-Bikes und/oder der Übertragung von Daten zwischen dem Fahrrad oder E-Bike und der Datenverarbeitungseinrichtung eine Anzeigefunktion übernehmen. Vorteilhafterweise ist die Anzeigevorrichtung dazu eingerichtet, den Ladezustand eines Akkumulators anzuzeigen und/oder eine gewählte Unterstützungsstufe eines Antriebsmotors. Bei diesem Akkumulator kann es sich beispielsweise um den Antriebsakkumulators des E-Bikes handeln und/oder um den Versorgungsakkumulator eines über den Stecker angeschlossenen mobilen Geräts. Die Anzeigevorrichtung kann dazu eingerichtet sein, den Zustand des Fahrrades oder E-Bikes anzeigen, z. B. die Laufleistung des Fahrrades oder E-Bikes und/oder den Zustand eines Antriebsakkumulators des E-bikes, z. B. dessen Kapazität, etwa relativ zu der Kapazität im Neuzustand. Bevorzugt ist die Anzeigevorrichtung separat zu dem Stecker ausgebildet, und wirkt weiter bevorzugt mit diesem nicht zusammen.

Die Fahrrad- oder E-Bike-Schnittstelle kann ein Funkmodul aufweisen, zur Datenübertragung mittels Bluetooth.

Die Fahrrad- oder E-Bike-Schnittstelle kann Bedienelemente aufweisen. In einer Ausführungsvariante kann mittels der Bedienelemente ein Umschalten zwischen verschiedenen Ansichten der Anzeigevorrichtung bewirkbar sein. In einer weiteren Ausführungsvariante kann mittels der Bedienelemente ein Umschalten zwischen verschiedenen Unterstützungsstufen des Antriebsmotors bewirkbar sein.

Die Fahrrad- oder E-Bike-Schnittstelle kann mittels des Steckers eine kabelgebundene Kommunikation zwischen dem Fahrrad oder E-Bike und der Peripherie, etwa einem mobilen Gerät eines Nutzers, erlauben. Mittels des Funkmoduls kann diese Kommunikation auch kabellos möglich sein.

Weiterhin vorgeschlagen wird ein bevorzugt einspuriges Fahrrad oder E-Bike, umfassend eine Fahrrad- oder E-Bike-Schnittstelle wie zuvor beschrieben.

Das Fahrrad oder E-Bike ist bevorzugt einspurig. Das Fahrrad oder E-Bike kann auch ein Trike, also dreispurig sein. Das Fahrrad kann ausschließlich oder zumindest auch muskelkraftbetrieben sein. Das E-Bike kann ausschließlich oder zumindest auch mittels des elektrischen Antriebsmotors betrieben sein. Das E-Bike kann muskelkraftbetrieben und mittels des elektrischen Antriebsmotors betrieben sein. Das E-Bike kann so ausgebildet sein, dass der elektrische Antriebsmotor nur dann wirkt oder nur dann seine volle Wirkung entfaltet, wenn der Nutzer gleichzeitig tritt. Insbesondere in dieser Ausführungsform kann das E-Bike auch als Pedelec oder S-Pedelec bezeichnet werden.

Vorteilhafterweise weist das Fahrrad oder E-Bike einen Rahmen auf, bevorzugt mit einem Oberrohr und/oder einem Unterrohr. Vorzugsweise ist die Halterung an dem Fahrrad- oder E-Bike-Rahmen fixiert, bevorzugt an dem Oberrohr und/oder einem Unterrohr. Die Halterung kann auch von dem Fahrrad- oder E-Bike-Rahmen, beispielsweise dem Oberrohr oder Unterrohr, gebildet sein.

Das Fahrrad oder E-Bike weist bevorzugt einen Lenkervorbau auf. In einer denkbaren Ausführungsvariante ist die Halterung an dem Lenkervorbau angeordnet oder von diesem gebildet.

Das Fahrrad oder E-Bike ist bevorzugt so eingerichtet, dass mit Hilfe der Fahrrad- oder E-Bike-Schnittstelle sowohl Ladestrom für eine insbesondere als Mobiltelefon bzw. Navigationsgerät ausgebildete Datenverarbeitungseinrichtung bereitstellbar ist, als auch, gleichzeitig oder nacheinander, Daten zwischen dem Fahrrad- oder E-Bike und einer insbesondere als Diagnosegerät ausgebildeten Datenverarbeitungseinrichtung übertragbar sind. Zu diesem Zweck kann das Fahrrad oder E-Bike eine Ladeelektronik und/oder eine Datenbereitstellelektronik aufweisen.

Ein besonders guter Schutz des Steckers bzw. der Steckeraufnahme und/oder eine besonders optisch ansprechende Fahrrad- oder E-Bike-Schnittstelle ist erzielbar, wenn der Stecker in der ersten Position der Steckeraufnahme in der Halterung bzw. in dem Fahrrad- oder E-Bike-Rahmen oder Lenkervorbau, versenkt ist, insbesondere derart, dass er von außen nicht sichtbar ist.

Die Zugänglichkeit des Steckers zur Herstellung und/oder zum Trennen einer Steckverbindung in der zweiten, bevorzugt ausgeschwenkten Position, der Steckeraufnahme, kann besonders gut erzielt sein, wenn der Stecker in der zweiten Position der Steckeraufnahme von der Halterung bzw. von dem Fahrrad- oder E-Bike-Rahmen oder Lenkervorbau vorsteht.

Vorzugsweise befestigt die Steckeraufnahme den Stecker an dem Fahrrad oder E-Bike. Verglichen mit einer denkbaren Alternative, in der der Stecker an einem losen Kabelende angeordnet ist, erleichtert dies die Herstellung einer Steckverbindung und kann die einhändige Herstellbarkeit der Steckverbindung ermöglichen.

In einer bevorzugten Ausführungsvariante weist das Fahrrad oder E-Bike in der Alternative als E-Bike einen elektrischen Antriebsmotor und einen Antriebsakkumulator auf. Bevorzugt ist die Fahrrad- oder E-Bike-Schnittstelle in der Alternative als E-Bike-Schnittstelle mittels einer elektrischen Leitung mit dem elektrischen Antriebsmotor und/oder dem Antriebsakkumulator verbunden.

In der Alternative, in der das Fahrrad oder E-Bike ein E-Bike, und die Fahrrad- oder E-Bike-Schnittstelle eine E-Bike-Schnittstelle ist, kommen die Vorteile der Erfindung besonders gut zur Geltung, da einerseits die E-Bike-Schnittstelle auf den Antriebsakkumulator des E-Bikes als Spannungsquelle zum Laden der Datenverarbeitungseinrichtung, insbesondere des mobilen Geräts, zurückgreifen kann, wodurch, verglichen mit dem möglichen Rückgriff auf einen Dynamo, ein besonders unterbrechungsfreier Ladevorgang möglich ist. Andererseits besteht gesteigerter Bedarf an der Datenübertragung, beispielsweise über den Zustand und das Alter des Antriebsakkumulators bzw. elektrischen Antriebsmotors.

Wenn das E-Bike eine elektrische Leitung aufweist, zwischen der Fahrrad- oder E-Bike-Schnittstelle und dem elektrischen Antriebsmotor und/oder dem Antriebsackumulator, dann ist eine Voraussetzung für einen besonders geeigneten Informationsaustausch zwischen diesem Motor bzw. diesem Akkumulator und der Fahrrad- oder E-Bike-Schnittstelle bzw. für das vorteilhafte Laden der Datenverarbeitungseinrichtung geschaffen. Die E-Bike-Schnittstelle kann diese Informationen bzw. den Ladestrom dann besonders gut, beispielsweise über den Stecker, verfügbar machen. Die E-Bike-Schnittstelle kann diese Informationen in einer Ausführungsvariante dann besonders gut über die Anzeigevorrichtung anzeigen.

Bevorzugt ist mittels der Fahrrad- oder E-Bike-Schnittstelle eine Verbindung bereitstellbar zwischen dem Fahrrad oder E-Bike und der Datenverarbeitungseinrichtung. Bevorzugt ist die Fahrrad- oder E-Bike-Schnittstelle mittels der elektrischen Leitung einerseits mit dem Antriebsakkumulator und dem elektrischen Antriebsmotor verbunden und mittels einer weiteren elektrischen Leitung andererseits mit der Datenverarbeitungseinrichtung verbindbar.

Vorteilhafterweise zeigt die Anzeigevorrichtung Betriebszustände von Elementen des Fahrrads oder E-Bikes oder von einer mit dem Fahrrad oder E-Bike verbundenen Datenverarbeitungseinrichtung an.

Die vorliegende Erfindung wird nachfolgend anhand von Ausführungsbeispielen unter Bezugnahme auf die beigefügten Figuren eingehend erläutert. Es zeigen:
- Fig. 1: eine perspektivische Darstellung eines Ausführungsbeispiels einer Fahrrad- oder E-Bike-Schnittstelle,
- Fig. 2: ein Teil eines Fahrrades oder E-Bikes umfassend die in Fig. 1 gezeigte Fahrrad- oder E-Bike-Schnittstelle,
- Fig. 3: eine perspektivische Darstellung der Steckeraufnahme der in Fig. 1 gezeigten Fahrrad- oder E-Bike-Schnittstelle,
- Fig. 4: eine Darstellung wie in Fig. 3, jedoch aus einem anderen Blickwinkel,
- Fig. 5: eine perspektivische Darstellung der Halterung der in Fig. 1 gezeigten Fahrrad- oder E-Bike-Schnittstelle,
- Fig. 6: eine Darstellung wie in Fig. 5, jedoch aus einem anderen Blickwinkel,
- Fig. 7: eine Seitendarstellung der in Fig. 1 gezeigten Fahrrad- oder E-Bike-Schnittstelle, mit an der Halterung befestigten und sich in der ersten Position befindlichen Steckeraufnahme,
- Fig. 8: eine Darstellung wie in Fig. 7, bei der sich die Steckeraufnahme jedoch in der zweiten Position befindet,
- Fig. 9: eine Darstellung wie in Fig. 7, bei der die Steckeraufnahme jedoch nicht an der Halterung befestigt ist,
- Fig. 10: eine Darstellung wie in Fig. 8, bei der die Fahrrad- oder E-BikeSchnittstelle zum einen mit einer Datenverarbeitungseinrichtung und zum anderen mit dem Antriebsakkumulator verbunden ist.

In den Figuren bezeichnen - soweit nicht anders angegeben - gleiche Bezugszeichen gleiche Komponenten mit gleicher Funktion.

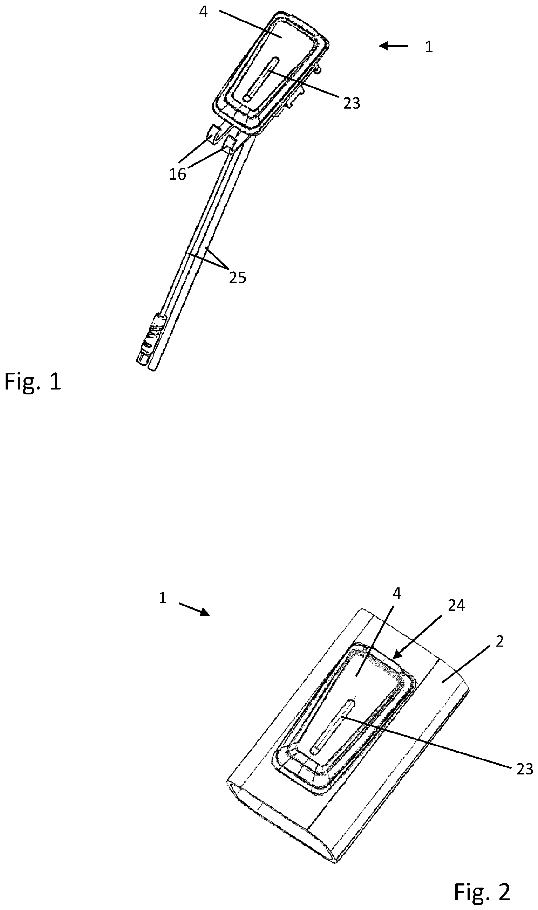

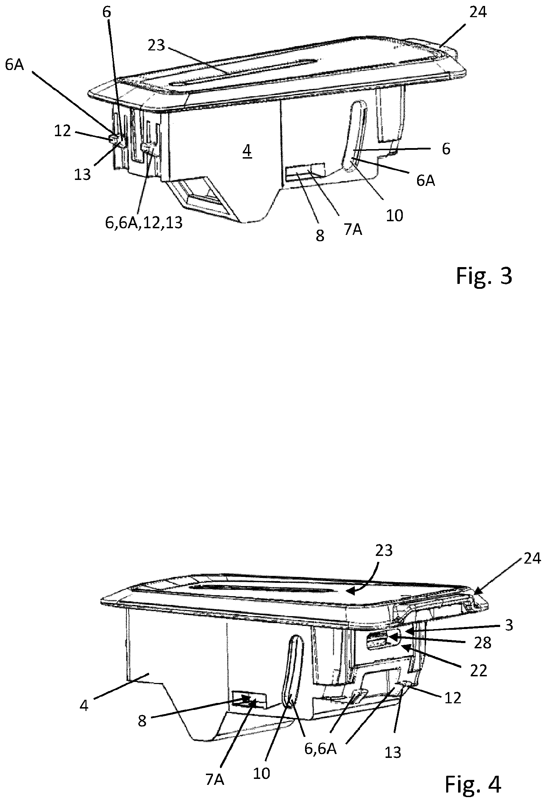

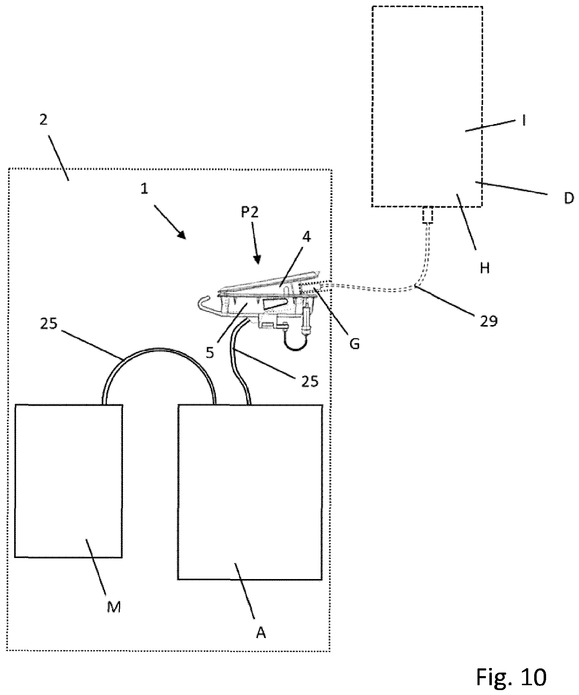

Figur 1 zeigt in Ausführungsbeispiel einer Fahrrad- oder E-Bike-Schnittstelle 1 zum Bereitstellen einer Verbindung zwischen einem Fahrrad oder E-Bike 2 und einer Datenverarbeitungseinrichtung D in der Alternative als E-Bike-Schnittstelle. Die Datenverarbeitungseinrichtung D ist ein mobiles Gerät H, und zwar ein Mobiltelefon I (vgl. Figur 10). Die E-Bike-Schnittstelle 1 weist einen Stecker 3, eine Steckeraufnahme 4, eine Halterung 5 und Befestigungsmittel 6 auf. Die Steckeraufnahme 4 ist mittels der Befestigungsmittel 6 verlagerbar an der Halterung 5 befestigt (vgl. Figuren 3 bis 6 und 8).

Die E-Bike-Schnittstelle 1 bzw. das E-Bike 2 ist so eingerichtet, dass mittels des Steckers 3 nacheinander sowohl Ladestrom für eine als mobiles Gerät H, und zwar als Mobiltelefon I, ausgebildete Datenverarbeitungseinrichtung D bereitstellbar ist, als auch Daten zwischen dem Fahrrad oder E-Bike 2 und der als Diagnosegerät (in den Figuren nicht gezeigt) ausgebildeten Datenverarbeitungseinrichtung D übertragbar sind.

Wie am besten Figur 4 zeigt, ist der Stecker 3 an der Steckeraufnahme 4 befestigt und in diese integriert.

Die Befestigungsmittel 6 umfassen an der Steckeraufnahme 4 angeordnete Aufnahmebefestigungsmittel 6A und an der Halterung 5 angeordnete, korrespondierend hierzu ausgebildete Halterungsbefestigungsmittel 6B.

Die Steckeraufnahme 4 ist mittels der Befestigungsmittel 6 schwimmend in der Halterung 5 gelagert. Die Befestigungsmittel 6 sind derart ausgebildet, dass sie ein Verlagern der Steckeraufnahme 4 relativ zu der Halterung 5 zwischen einer ersten, eingeschwenkten, Position P1 der Steckeraufnahme 4 und einer zweiten, ausgeschwenkten, Position P2, der Steckeraufnahme 4 ermöglichen. Der Stecker 3, genauer gesagt sein Steckgesicht 28 ist in der ersten Position P1 der Steckeraufnahme 4 in der Halterung 5 versenkt, und zwar derart, dass der Stecker 3 für das Herstellen und/oder Trennen einer Steckverbindung unzugänglich und vor der Witterung geschützt ist. Das Steckgesicht 28 ist in der zweiten Position P2 der Steckeraufnahme 4 derart außerhalb der Halterung 5 angeordnet, dass der Stecker 3 für das Herstellen und/oder Trennen einer Steckverbindung zugänglich ist (Figuren 4, 7 und 8).

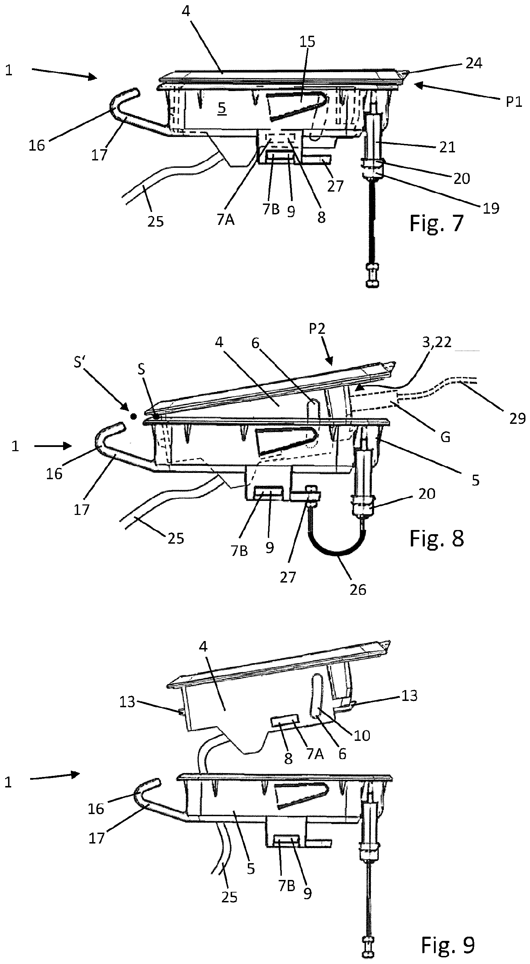

Wie beispielsweise aus einer Zusammenschau der Figuren 7 und 8 hervorgeht, ist die Steckeraufnahme 4 mittels der Befestigungsmittel 6 um eine Schwenkachse S, S' verschwenkbar an der Halterung 5 befestigt. Die verlagerbare Befestigung lässt also eine Rotationsbewegung der Steckeraufnahme 4 relativ zu der Halterung 5 zu.

Figur 8 zeigt zwei von vielen möglichen Positionen der Schwenkachse S, S'. Es ist erkennbar, dass die Schwenkachse S, S' virtuell und verlagerbar ist.

Der Griff 24 zur Erleichterung der Verlagerung der Steckeraufnahme 4 von der ersten Position P1 in die zweite Position P2 ist z. B. in Figur 4 gezeigt.

Die E-Bike-Schnittstelle umfasst Rückholmittel 7A, 7B, die berührungslos wirken und einen Magnet 8 und ein magnetisches Gegenstück 9 umfassen (siehe etwa Figur 7).

Bevorzugt erlauben sowohl die Befestigungsmittel 6 als auch die Rückholmittel 7A, 7B das werkzeuglose Verbinden und/oder Trennen von Steckeraufnahme 4 und Halterung 5. Ausgehend von der in Figur 9 gezeigten Situation kann die Steckeraufnahme 4 in die Halterung 5 eingeklickt werden.

Die Befestigungsmittel 6 umfassen im gezeigten Ausführungsbeispiel vier jeweils als Rastnase 13 ausgebildete, an der Steckeraufnahme 4 angeordnete Vorsprünge 12. Diese Vorsprünge 12 stellen jeweils mit einem von vier an der Halterung 5 bereitgestellten Gegenvorsprüngen 14 einen Anschlag bereit. Die Befestigungsmittel 6 umfassen zudem zwei gegenüberliegende gekrümmte Führungskulissen 10 an der Steckeraufnahme 4 und zwei jeweils in die Führungskulisse 10 eingreifenden und mittels einer Feder 15 gelagerte Kulissensteine 11 an der Halterung 5 (Figur 3 bis 6).

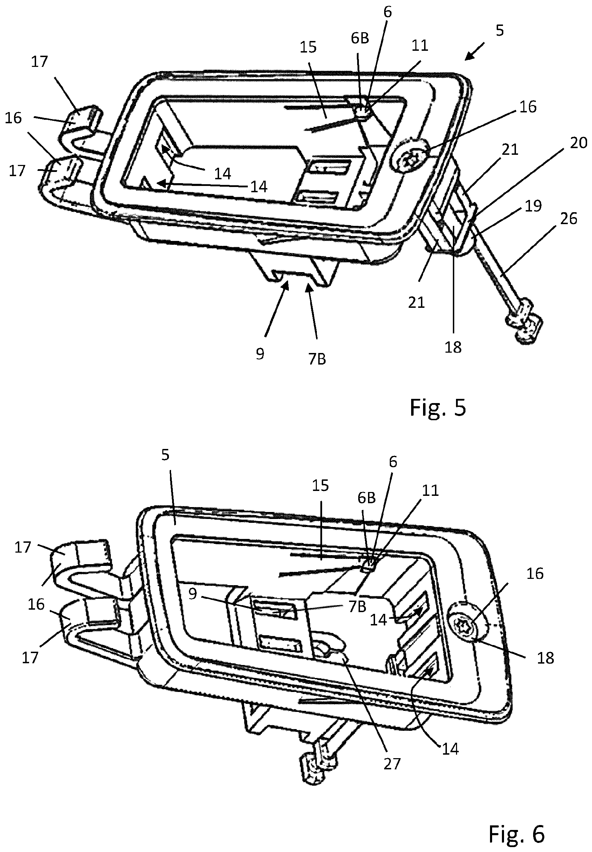

Die Halterung 5 ist dazu eingerichtet, an dem E-Bike 2 fixiert zu werden. Figur 2 zeigt den fixierten Zustand. Wie etwa in den Figuren 5 und 8 erkennbar, umfasst die Halterung 5 Fixiermittel 16 zur Befestigung der Halterung 5 an dem Fahrrad oder E-Bike 2. Die Fixiermittel 16 umfassen zwei Halteklammern 17 zum Hintergreifen einer Rahmeninnenwand des Fahrrad oder E-Bikes 2. Die Fixiermittel 16 umfassen zudem eine Schraube 18, die mit einer Gabelmutter 19 zusammenwirkt. Die Schraube 18 und die Halteklammer sind jeweils in einem Endbereich der Halterung 5 angeordnet. Diese Endbereiche liegen einander gegenüber (Figur 5). Die Gabelmutter 19 umfasst einen Gabelkopf 20 mit einem Innengewinde und Gabelzinken 21 zur Abstützung an einer Rahmeninnenwand des E-Bikes. Die Gabelmutter 19 ist mittels eines Fangriemens 26 und einer Haltezange 27 verliersicher an der Halterung 5 angeordnet. Zu diesem Zweck ist der Fangriemen 26 mit der Haltezange 27 einklickbar bzw. verrastbar, wie dies in Figur 8 und 10 gezeigt ist.

Der in den Figuren im Einzelnen nicht erkennbare Stecker 3 ist durch einen USB-Stecker 22 gebildet.

Zusätzlich zu dem Stecker weist die E-Bike-Schnittstelle eine Anzeigevorrichtung 23, nämlich mehrere LED, auf. Die E-Bike-Schnittstelle erlaubt mittels des Steckers 3 eine kabelgebundene Kommunikation zwischen dem E-Bike und der Peripherie, nämlich dem mobilen Gerät H in Form des Mobiltelefons I eines Nutzers und/oder einem Diagnosegerät, beispielsweise einer Fahrradwerkstatt.

Von dem Ausführungsbeispiel des Fahrrad oder E-Bikes 2 ist in den Figuren lediglich ein kleiner Rahmenabschnitt gezeigt (Figur 2) und zwar in der Alternative als E-Bike. Das E-Bike umfasst eine Fahrrad- oder E-Bike-Schnittstelle 1 in der Alternative als E-Bike-Schnittstelle, wie zuvor beschrieben. Die Halterung 5 ist an dem Fahrrad- oder E-Bike-Rahmen fixiert.

Der Stecker 3 ist in der ersten Position P1 in der Halterung 5 und in dem E-Bike-Rahmen versenkt, und zwar derart, dass er von außen nicht sichtbar ist (Figur 2). In der zweiten, ausgeschwenkten Position P2 der Steckeraufnahme 4, steht der Stecker 3 von der Halterung 5 und von dem E-Bike-Rahmen vor und kann mit einem Gegenstecker G eine Steckverbindung bilden (Figur 8 und 10).

Figur 10 zeigt, dass die E-Bike-Schnittstelle 1 eine Verbindung bereitstellt zwischen dem E-Bike 2 und der Datenverarbeitungseinrichtung D und dass sie mittels einer elektrischen Leitung 25 einerseits mit dem Antriebsakkumulator A und dem elektrischen Antriebsmotor M und andererseits mit der Datenverarbeitungseinrichtung D verbunden ist.

### Bezugszeichenliste

- 1: Fahrrad- oder E-Bike-Schnittstelle
- 2: Fahrrad oder E-Bike
- 3: Stecker
- 4: Steckeraufnahme
- 5: Halterung
- 6: Befestigungsmittel
- 6A: Aufnahmebefestigungsmittel
- 6B: Halterungsbefestigungsmittel
- 7A: Rückholmittel
- 7B: Rückholmittel
- 8: Magnet
- 9: magnetisches Gegenstück
- 10: Führungskulisse
- 11: Kulissenstein
- 12: Vorsprung
- 13: Rastnase
- 14: Gegenvorsprung
- 15: Feder
- 16: Fixiermittel
- 17: Halteklammer
- 18: Schraube
- 19: Gabelmutter
- 20: Gabelkopf
- 21: Gabelzinken
- 22: USB-Stecker
- 23: Anzeigevorrichtung
- 24: Griff
- 25: elektrische Leitung
- 26: Fangriemen
- 27: Haltezange
- 28: Steckgesicht
- 29: weitere elektrische Leitung

- A: Antriebsakkumulator
- D: Datenverarbeitungseinrichtung
- G: Gegenstecker
- H: Mobiles Gerät
- I: Mobiltelefon
- M: Antriebsmotor
- P1: erste Position
- P2: zweite Position
- S, S': Schwenkachse

## Patentansprüche

1. Fahrrad- oder E-Bike-Schnittstelle (1) zum Bereitstellen einer Verbindung zwischen einem Fahrrad oder E-Bike (2) und einer Datenverarbeitungseinrichtung (D), z. B. einem mobilen Gerät (H), wobei die Fahrrad- oder E-Bike-Schnittstelle (1) einen Stecker (3), eine Steckeraufnahme (4), eine Halterung (5) und Befestigungsmittel (6) aufweist,
wobei die Steckeraufnahme (4) mittels der Befestigungsmittel (6) verlagerbar an der Halterung (5) befestigt ist, wobei die Halterung dazu eingerichtet ist, an dem Fahrrad oder dem E-Bike fixiert zu werden,
**dadurch gekennzeichnet, dass**
die Befestigungsmittel (6) derart ausgebildet sind, dass sie ein Verlagern der Steckeraufnahme (4) relativ zu der Halterung (5) zwischen einer ersten, bevorzugt eingeschwenkten, Position (P1) der Steckeraufnahme (4), in der der Stecker (3) zumindest teilweise in der Halterung (5) versenkt ist und einer zweiten, bevorzugt ausgeschwenkten Position (P2), der Steckeraufnahme (4), in der der Stecker (3) zumindest teilweise außerhalb der Halterung (5) angeordnet ist, ermöglichen.

2. Fahrrad- oder E-Bike-Schnittstelle (1) nach Anspruch 1,
**dadurch gekennzeichnet, dass**
die Datenverarbeitungseinrichtung (D) ein mobiles Gerät (H), z. B. ein Mobiltelefon, umfasst und die Fahrrad- oder E-Bike-Schnittstelle (1) so eingerichtet ist, dass mit ihrer Hilfe Ladestrom für das mobile Gerät (H) bereitstellbar ist.

3. Fahrrad- oder E-Bike-Schnittstelle (1) nach Anspruch 1 oder 2,
**dadurch gekennzeichnet, dass**
die Befestigungsmittel (6) an der Steckeraufnahme (4) angeordnete Aufnahmebefestigungsmittel (6A) und an der Halterung (5) angeordnete Halterungsbefestigungsmittel (6B) umfassen, die korrespondierend zueinander ausgebildet sind.

4. Fahrrad- oder E-Bike-Schnittstelle (1) nach einem der Ansprüche 1 bis 3,
**dadurch gekennzeichnet, dass**
die Steckeraufnahme (4) mittels der Befestigungsmittel (6) um eine Schwenkachse (S, S') verschwenkbar an der Halterung (5) befestigt ist.

5. Fahrrad- oder E-Bike-Schnittstelle (1) nach Anspruch 4,
**dadurch gekennzeichnet, dass**
die Schwenkachse (S, S') virtuell und verlagerbar ist.

6. Fahrrad- oder E-Bike-Schnittstelle (1) nach einem der Ansprüche 1 bis 6,
**dadurch gekennzeichnet, dass**
die Fahrrad- oder E-Bike-Schnittstelle (1) Rückholmittel (7A, 7B) umfasst, die eine Zugkraft zwischen der Steckeraufnahme (4) und der Halterung (5) bewirken, wobei die Zugkraft bevorzugt in der ersten Position (P1) größer ist als in der zweiten Position (P2).

7. Fahrrad- oder E-Bike-Schnittstelle (1) nach Anspruch 6,
**dadurch gekennzeichnet, dass**
die Steckeraufnahme (4) in der zweiten Position (P2) in einer Rastposition ist, in der die Zugkraft der Rückholmittel (7A, 7B) von einer Rasteinrichtung aufgenommen wird.

8. Fahrrad- oder E-Bike-Schnittstelle (1) nach Anspruch 6 oder 7,
**dadurch gekennzeichnet, dass**
die Rückholmittel (7A, 7B) einen Magnet (8) und ein magnetisches Gegenstück (9) umfassen.

9. Fahrrad- oder E-Bike-Schnittstelle (1) nach einem der Ansprüche 1 bis 8,
**dadurch gekennzeichnet, dass**
die Steckeraufnahme (4) werkzeuglos mit der Halterung (5) verbindbar, bevorzugt verrastbar, und/oder von dieser trennbar ist.

10. Fahrrad- oder E-Bike-Schnittstelle (1) nach einem der Ansprüche 1 bis 9,
**dadurch gekennzeichnet, dass**
die Befestigungsmittel (6) mindestens eine Führungskulisse (10) und einen in die Führungskulisse (10) eingreifenden Kulissenstein (11) umfassen und/oder dass
die Befestigungsmittel (6) mindestens einen - bevorzugt als Rastnase (13) ausgebildeten - Vorsprung (12) umfassen, der mit mindestens einem Gegenvorsprung (14) einen Anschlag bereitstellt.

11. Fahrrad- oder E-Bike-Schnittstelle (1) nach einem der Ansprüche 1 bis 10,
**dadurch gekennzeichnet, dass**
die Halterung (5) Fixiermittel (16) zur Befestigung der Halterung (5) an dem Fahrrad oder E-Bike (2) umfasst und die Fixiermittel (16) mindestens eine Halteklammer (17) zum Hintergreifen eines Bereichs des Fahrrades oder E-Bikes (2) und/oder eine Schraube (18) umfassen, wobei die Schraube (18) mit einer Gabelmutter (19) der Halterung (5) zusammenwirkt, wobei die Gabelmutter (19) einen Gabelkopf (20) mit einem Innengewinde und zur Abstützung an dem Fahrrad oder E-Bike (2) Gabelzinken (21) umfasst, und wobei die Gabelmutter (19) mittels eines Fangriemens (26) der Halterung (5) und einer Haltezange (27) der Halterung (5) verliersicher an der Halterung (5) angeordnet ist.

12. Fahrrad- oder E-Bike-Schnittstelle (1) nach einem der Ansprüche 1 bis 11,
**dadurch gekennzeichnet, dass**
der Stecker (3) einen USB-Stecker (22) umfasst oder hierdurch gebildet ist.

13. Fahrrad- oder E-Bike-Schnittstelle (1) nach einem der Ansprüche 1 bis 12,
**dadurch gekennzeichnet, dass**
die Fahrrad- oder E-Bike-Schnittstelle (1) eine Anzeigevorrichtung (23), beispielsweise mindestens eine LED und/oder ein Matrixdisplay, etwa LCD-Display, aufweist.

14. Fahrrad- oder E-Bike (2), umfassend eine Fahrrad- oder E-Bike-Schnittstelle (1) nach einem der Ansprüche 1 bis 13.

15. Fahrrad- oder E-Bike (2) nach Anspruch 14,
**dadurch gekennzeichnet, dass**
das Fahrrad oder E-Bike (2) einen elektrischen Antriebsmotor (M) aufweist und einen Antriebsakkumulator (A) und die Fahrrad- oder E-Bike-Schnittstelle (1) mittels einer elektrischen Leitung (25) mit dem Antriebsackumulator (A) und/oder mit dem Antriebsmotor (M) verbunden ist.

## Claims

1. Bicycle or e-bike interface (1) for providing a connection between a bicycle or e-bike (2) and a data processing device (D), e.g. a mobile device (H), wherein the bicycle or e-bike interface (1) has a plug (3), a plug socket (4), a holder (5) and attachment means (6), wherein the plug socket (4) is displaceably attached to the holder (5) by means of the attachment means (6), wherein the holder is designed to be fixed to the bicycle or e-bike, **characterized in that** the attachment means (6) are designed in such a way that they enable a displacement of the plug socket (4) relative to the holder (5) between a first, preferably pivoted-in, position (P1) of the plug socket (4), in which the plug (3) is at least partially recessed in the holder (5) and a second, preferably pivoted-out position (P2), of the plug socket (4), in which the plug (3) is arranged at least partially outside the holder (5).

2. Bicycle or e-bike interface (1) according to Claim 1, **characterized in that** the data processing device (D) comprises a mobile device (H), e.g. a mobile phone, and the bicycle or e-bike interface (1) is designed such that it can be used to provide charging current for the mobile device (H).

3. Bicycle or e-bike interface (1) according to Claim 1 or 2, **characterized in that** the attachment means (6) comprise socket attachment means (6A) arranged on the plug socket (4) and holder attachment means (6B) arranged on the holder (5), which are designed to correspond to one another.

4. Bicycle or e-bike interface (1) according to one of Claims 1 to 3, **characterized in that** the plug socket (4) is attached to the holder (5) by means of the attachment means (6) so as to be pivotable about a pivot axis (S, S').

5. Bicycle or e-bike interface (1) according to Claim 4, **characterized in that** the pivot axis (S, S') is virtual and displaceable.

6. Bicycle or e-bike interface (1) according to one of Claims 1 to 6, **characterized in that** the bicycle or e-bike interface (1) comprises return means (7A, 7B), which create a pulling force between the plug socket (4) and the holder (5), wherein the pulling force is preferably greater in the first position (P1) than in the second position (P2).

7. Bicycle or e-bike interface (1) according to Claim 6, **characterized in that** the plug socket (4) is in a lock-in position in the second position (P2), in which the pulling force of the return means (7A, 7B) is absorbed by a locking device.

8. Bicycle or e-bike interface (1) according to Claim 6 or 7, **characterized in that** the return means (7A, 7B) comprise a magnet (8) and a magnetic counterpart (9).

9. Bicycle or e-bike interface (1) according to one of Claims 1 to 8, **characterized in that** the plug socket (4) can be connected, preferably latched, to the holder (5) and/or removed from it without tools.

10. Bicycle or e-bike interface (1) according to one of Claims 1 to 9, **characterized in that** the attachment means (6) comprise at least one guide slot (10) and a sliding block (11) engaging in the guide slot (10) and/or **in that** the attachment means (6) comprise at least one protrusion (12), preferably designed as a latching lug (13), which provides a stop with at least one mating protrusion (14).

11. Bicycle or e-bike interface (1) according to one of Claims 1 to 10, **characterized in that** the holder (5) has fixing means (16) for attaching the holder (5) to the bicycle or e-bike (2) and the fixing means (16) comprise at least one retaining clip (17) for engaging behind a region of the bicycle or e-bike (2) and/or a screw (18), wherein the screw (18) interacts with a fork nut (19) of the holder (5), wherein the fork nut (19) comprises a fork head (20) with a female thread and fork prongs (21) for support on the bicycle or e-bike (2), and wherein the fork nut (19) is arranged on the holder (5) in a captive manner by means of a catch strap (26) of the holder (5) and a holding claw (27) of the holder (5).

12. Bicycle or e-bike interface (1) according to one of Claims 1 to 11, **characterized in that** the plug (3) comprises a USB plug (22) or is formed thereby.

13. Bicycle or e-bike interface (1) according to one of Claims 1 to 12, **characterized in that** the bicycle or e-bike interface (1) has a display device (23), for example at least one LED and/or matrix display, such as an LCD display.

14. Bicycle or e-bike (2), comprising a bicycle or e-bike interface (1) according to one of Claims 1 to 13.

15. Bicycle or e-bike (2) according to Claim 14, **characterized in that** the bicycle or e-bike (2) has an electric drive motor (M) and a drive accumulator (A) and the bicycle or e-bike interface (1) is connected to the drive accumulator (A) and or to the drive motor (M) by means of an electrical line (25).

## Revendications

1. Interface pour vélo ou vélo électrique (1) pour établir une connexion entre un vélo ou un vélo électrique (2) et un dispositif de traitement de données (D), par ex. un appareil mobile (H), dans lequel l'interface pour vélo ou vélo électrique (1), présente une fiche (3), un réceptacle de fiche (4), une embase (5) et des moyens de fixation (6), dans lequel le réceptacle de fiche (4) est fixé à l'embase (5) au moyen des moyens de fixation (6), lorsque l'embase est destinée à être fixée au vélo ou au vélo électrique, **caractérisé en ce que** les moyens de fixation (6) sont conçus de telle sorte qu'ils permettent de déplacer le réceptacle de fiche (4) par rapport à l'embase (5) entre une première position, de préférence pivotée, (P1) du réceptacle de fiche (4), dans lequel la fiche (3) est au moins partiellement enfoncée dans l'embase (5) et une deuxième position, de préférence rabattue (P2), du réceptacle de fiche (4), dans laquelle la fiche (3) est disposée au moins partiellement à l'extérieur de l'embase (5).

2. Interface pour vélo ou vélo électrique (1) selon la revendication 1, **caractérisée en ce que** le dispositif de traitement de données (D) est un appareil mobile (H), par ex. un téléphone mobile, et l'interface de vélo ou de vélo électrique (1) est configurée de manière à pouvoir être utilisée pour fournir du courant de charge au dispositif mobile (H).

3. Interface pour vélo ou vélo électrique (1) selon la revendication 1 ou 2, **caractérisée en ce que** les moyens de fixation (6) sont des moyens de fixation de réceptacle (6A) disposés sur le réceptacle de fiche (4) et des moyens de fixation d'embase (6B) disposés sur l'embase (5), qui sont conçus pour correspondre les uns aux autres.

4. Interface pour vélo ou vélo électrique (1) selon une des revendications 1 à 3, **caractérisée en ce que** le réceptacle de fiche (4) est fixé de manière pivotante à l'embase (5) au moyen des moyens de fixation (6) autour d'un axe de pivotement (S, S').

5. Interface pour vélo ou vélo électrique (1) selon la revendication 4, **caractérisée en ce que** l'axe de pivotement (S, S') est virtuel et déplaçable.

6. Interface pour vélo ou vélo électrique (1) selon une des revendications 1 à 6, **caractérisée en ce que** l'interface pour vélo ou vélo électrique (1) comprend des moyens de rappel (7A, 7B) qui génèrent une force de traction entre le réceptacle de la fiche (4) et l'embase (5), dans lequel la force de traction est de préférence plus grande dans la première position (P1) que dans la deuxième position (P2).

7. Interface pour vélo ou vélo électrique (1) selon la revendication 6, **caractérisée en ce que** le réceptacle de fiche (4) dans la deuxième position (P2) est dans une position d'encliquetage dans laquelle la force de traction des moyens de rappel (7A, 7B) est absorbée par un dispositif de verrouillage.

8. Interface pour vélo ou vélo électrique (1) selon la revendication 6 ou 7, **caractérisée en ce que** les moyens de rappel (7A, 7B) comprennent un aimant (8) et une contre-pièce magnétique (9).

9. Interface pour vélo ou vélo électrique (1) selon une des revendications 1 à 8, **caractérisée en ce que** le réceptacle de fiche (4) peut être connecté à l'embase (5) sans outil, de préférence verrouillable, et/ou peut être séparé de celle-ci.

10. Interface pour vélo ou vélo électrique (1) selon une des revendications 1 à 9, **caractérisée en ce que** les moyens de fixation (6) comprennent au moins une glissière de guidage (10) et un coulisseau (11) s'engageant dans la glissière de guidage (10) et/ou **en ce que** les moyens de fixation (6) comprennent au moins une protubérance (12), de préférence réalisée sous forme d'ergot de verrouillage (13), qui constitue une butée avec au moins une contre-protubérance (14).

11. Interface pour vélo ou vélo électrique (1) selon une des revendications 1 à 10, **caractérisée en ce que** l'embase (5) présente des moyens de fixation (16) pour fixer l'embase (5) au vélo ou vélo électrique (2) et les moyens de fixation (16) comprennent au moins un clip de retenue (17) pour saisir derrière une zone du vélo ou du vélo électrique (2) et/ou une vis (18), dans laquelle la vis (18) interagit avec un écrou de fourche (19) de l'embase (5), dans lequel l'écrou de fourche (19) comprend une tête de fourche (20) avec un filetage interne et des bras de fourche (21) pour une embase sur le vélo ou le vélo électrique (2), et dans laquelle l'écrou de fourche (19) est disposé de manière imperdable sur l'embase (5) au moyen d'une attache (26) de l'embase (5) et d'une pince de maintien (27) de l'embase (5).

12. Interface pour vélo ou vélo électrique (1) selon l'une des revendications 1 à 11, **caractérisée en ce que** la fiche (3) comprend une fiche USB (22) ou est formée par celle-ci.

13. Interface pour vélo ou vélo électrique (1) selon une des revendications 1 à 12, **caractérisée en ce que** l'interface pour vélo ou vélo électrique (1) présente un dispositif d'affichage (23), par exemple au moins une LED et/ou dispose d'un écran matriciel, tel qu'un écran LCD.

14. Vélo ou vélo électrique (2), comprenant une interface pour vélo ou vélo électrique (1) selon une des revendications 1 à 13.

15. Vélo ou vélo électrique (2) selon la revendication 14, **caractérisé en ce que** le vélo ou le vélo électrique (2) est équipé d'un moteur d'entraînement électrique (M) et d'un accumulateur d'entraînement (A) et que l'interface de vélo ou de vélo électrique (1) est reliée à l'accumulateur d'entraînement (A) et/ou au moteur d'entraînement (M) au moyen d'une ligne électrique (25).
